# FASCICULE DE BREVET EUROPEEN

(11) **EP 0 473 747 B1**
(45) Date de publication et mention de la délivrance du brevet: **15.06.1994**
(21) Numéro de dépôt: 91905577.2
(22) Date de dépôt: 21.03.1991
(51) Int. Cl.: B23Q 39/04, B23Q 7/04

(54) **MACHINE D'USINAGE, NOTAMMENT DE DECOLLETAGE**
WERKZEUGMASCHINE, INSBESONDERE FÜR DEKOLLETIEREN
METAL-WORKING MACHINE, IN PARTICULAR FOR BAR MACHINING

(30) Priorité: 26.03.1990 FR 9003992
(43) Date de publication de la demande: 11.03.1992
(73) Titulaire: ESCO S.A., CH-2206 Les Geneveys-sur-Coffrane (CH)
(72) Inventeur: ROSSETTI, Hubert, CH-2206 Les Geneveys-sur-Coffrane (CH); PIGUET, Pierre-Louis, CH-2300 La Chaux-de-Fonds (CH)
(74) Mandataire: Nithardt, Roland
(86) Numéro de dépôt international: CH9100069
(87) Numéro de publication internationale: WO9114534

(56) Documents cités:
- DE-A- 2 401 656
- DE-A- 2 846 319
- DE-A- 3 626 324

## Description

La présente invention concerne une machine d'usinage, notamment de décolletage, comportant une première unité d'usinage comprenant une tête d'usinage et des moyens pour amener et déplacer axialement la matière à usiner, une tourelle principale équipée d'au moins un poste d'usinage agencé pour usiner la face avant d'une pièce travaillée par ladite tête d'usinage, et une deuxième unité d'usinage agencée pour usiner la face arrière de ladite pièce, ladite tourelle principale étant du type revolver et comportant en outre au moins un poste de prise en charge de pièces travaillées par ladite tête d'usinage et/ou usinées antérieurement sur leur face avant, en vue d'un usinage sur leur face arrière simultanément à l'usinage d'une autre pièce par ladite tête d'usinage.

Il existe actuellement sur le marché des machines destinées à l'usinage complet de pièces, cet usinage étant effectué sur la face frontale, sur la face arrière et le long de la surface périphérique de ces pièces. Lorsque la pièce est usinée sur sa face frontale puis coupée, elle est chargée par un dispositif appelé contre-broche ou contre-pince selon que la pièce est tournante ou non, qui assure le transfert de cette pièce et sa mise en place en face de postes d'usinage destinés à l'usinage de la face arrière.

Dans ces machines, l'élément de transfert est conçu pour maintenir la pièce pendant la coupe. Dans les machines où la pièce est tournante, un seul dispositif de transfert est disponible, ce qui empêche toute autre opération pendant cette phase de transfert. Dans les machines où la pièce n'est pas tournante, il peut y avoir deux dispositifs dont l'un maintient la pièce lors de la coupe pendant que l'autre sert à déplacer la pièce en face d'un poste d'usinage de la face arrière. Ceci permet d'augmenter le rendement en autorisant un travail simultané sur deux pièces. Le document DE-A-2 846 319 décrit une machine-outil de ce genre, correspondant au préambule de la revendication 1.

Néanmoins, les possibilités de ces machines connues sont limitées et elles ne permettent pas d'effectuer un nombre d'usinages simultanés supérieur à deux.

La présente invention se propose de pallier ces inconvénients en réalisant une machine qui permet d'effectuer des usinages multiples simultanés ce qui a pour conséquence de réduire le temps de production d'une pièce, en le fractionnant du fait que l'usinage simultané de plusieurs pièces se fait sur différents postes d'usinage. Dans la pratique, la machine selon l'invention se propose de combiner les possibilités d'une machine de décolletage traditionnelle avec celle d'une unité de transfert et de réaliser ainsi une machine unique à très haute performance.

Ce but est atteint par la machine d'usinage selon l'invention, caractérisée en ce qu'elle comporte une troisième unité d'usinage, portant au moins un poste d'usinage équipé d'au moins un outil perpendiculaire à l'axe de la pièce, et en ce que ladite tourelle principale comporte au moins deux desdits postes de prise en charge de pièces, en vue de l'usinage de ces pièces par la deuxième et/ou la troisième unité d'usinage simultanément à l'usinage d'une autre pièce par ladite tête d'usinage.

Selon une forme de réalisation avantageuse, lesdits postes de prise en charge d'une pièce sont mobiles axialement.

De préférence la deuxième unité d'usinage comporte plusieurs postes d'usinage, d'axes parallèles à l'axe de la pièce et disposés dans une position telle que les postes de prise en charge d'une pièce puissent être amenés en face de ces postes d'usinage.

Ledit outil de ladite troisième unité d'usinage peut être rotatif et le poste d'usinage de cette unité peut être mobile axialement dans une direction perpendiculaire à l'axe de la pièce.

Dans une forme de réalisation particulièrement avantageuse, la peut comporter une tourelle auxiliaire comportant au moins un poste d'usinage et montée sur une coulisse perpendiculaire à l'axe de la pièce, le poste d'usinage étant rotatif et mobile axialement selon une direction parallèle à l'axe de la pièce.

Dans une forme de réalisation où la machine comporte à la fois une tourelle principale et une tourelle auxiliaire, ces deux tourelles peuvent être montées sur une même coulisse, pour être mobiles dans une direction perpendiculaire à l'axe de la pièce.

La présente invention sera mieux comprise en référence à la description d'un exemple de réalisation et du dessin annexé dans lequel :

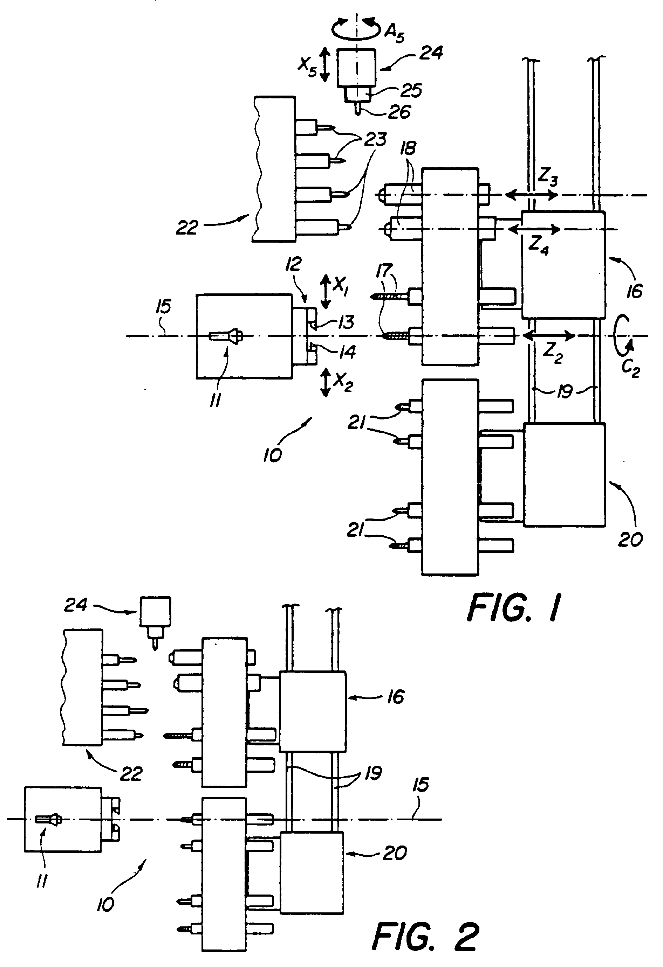

la figure 1 représente une vue schématique de la machine selon l'invention lorsque la tourelle principale se trouve dans une première position, et
la figure 2 représente une vue similaire à celle de la figure 1 lorsque la tourelle principale se trouve dans une seconde position.

En référence aux figures, la machine d'usinage 10 représentée comporte des moyens 11 pour amener la matière à usiner, qui se trouve à l'état de barre ou de fil, initialement présenté en torche et redressé, vers une tête d'usinage 12. La matière est, dans ce cas, non tournante et des outils 13 et 14, montés sur la tête d'usinage 12, sont entraînés en rotation autour d'un axe 15 qui correspond à l'axe de la matière à usiner. Ces outils, qui sont avantageusement des outils de décolletage et de coupe de la pièce après son usinage, sont en outre mobiles perpendiculairement à l'axe 15 comme le montrent schématiquement les doubles flèches X₁ et X₂. Les moyens 11 sont constitués par une pince qui maintient la matière et la fait avancer le long de l'axe 15 à une vitesse déterminée par des moyens de commande non représentés.

En regard de ces éléments, se trouve une tourelle principale 16, du type revolver comprenant par exemple six postes de travail, à savoir des postes d'usinage 17 et des postes de prise en charge 18 des pièces. La machine comporte au moins deux postes de prise en charge 18, mais ce nombre peut être augmenté pour accroître le nombre de pièces travaillées simultanément. Les postes d'usinage 17 sont agencés pour assurer l'usinage de la face frontale d'une pièce travaillée par les outils 13 et 14 et les postes de prise en charge 18 sont agencés pour prendre en charge la pièce pendant et après la coupe, c'est-à-dire pendant l'opération qui consiste à détacher la pièce décolletée de la barre de matière. Ces postes de prise en charge sont par ailleurs conçus pour assurer le transfert de la pièce vers d'autres postes, notamment des postes d'usinage de la face arrière ou pour assurer le maintien de la pièce pendant un tel usinage arrière.

Les postes d'usinage 17 sont équipés d'outils rotatifs et à déplacement axial comme le montrent schématiquement les doubles flèches Z₂ et C₂. Les postes de prise en charge 18 portent avantageusement des pinces de prise en charge mobiles axialement comme le montrent les doubles flèches respectivement Z₃ et Z₄.

La tourelle 16 est de préférence montée sur une coulisse 19 composée de deux guides ou rails parallèles autorisant son déplacement perpendiculaire à l'axe 15.

Selon une forme de réalisation particulièrement avantageuse, la machine 10 comporte une tourelle auxiliaire 20 qui peut être identique à la tourelle principale 16, c'est-à-dire être du type revolver et comporter par exemple six postes d'usinage 21. Ces postes d'usinage comportent dans ce cas des outils d'usinage classiques, notamment de perçage, destinés à travailler sur la face frontale d'une pièce décolletée par les outils 13 et 14; ils sont de préférence mobiles parallèlement à l'axe. Lorsque la matière à usiner, c'est-à-dire la pièce décolletée est tournante, les outils des postes d'usinage peuvent être non rotatifs. Dans le cas où la pièce n'est pas elle-même entraînée en rotation, les outils montés dans les postes d'usinage 21 sont bien entendu rotatifs.

La tourelle auxiliaire 20 est également montée sur la coulisse 19 et peut se déplacer selon une direction perpendiculaire à l'axe 15. Les deux tourelles principale et auxiliaire se complètent en ce sens qu'une pièce partiellement usinée peut être prise en charge par les postes 18, et que la tourelle principale 16 peut se déplacer pour amener cette pièce vers d'autres postes d'usinage qui seront décrits ci-dessous. Simultanément, la tourelle auxiliaire 20 peut être amenée en position frontale en face d'une nouvelle pièce à usiner, ce qui permet un travail simultané sur plusieurs postes d'usinage.

Selon une variante très avantageuse qui permet d'augmenter l'efficacité de la machine et de réduire considérablement le temps d'usinage des pièces, celle-ci comporte une unité 22 qui sera appelée par la suite plaque de contre-opération, portant par exemple quatre postes d'usinage 23 destinés à travailler la face arrière de pièces préalablement usinées par les outils 13 et 14 et traitées sur leur face frontale par les outils des postes d'usinage 17, ces pièces étant prises en charge et maintenues en place ou même entraînées en rotation par les postes de prise en charge 18. Cette plaque de contre-opération 22 est fixe axialement. En revanche, les postes d'usinage peuvent être soit fixes, soit rotatifs.

Pour compléter cette machine et augmenter les possibilités qu'elle offre sur le plan de l'usinage de pièces, il est prévu une unité d'usinage 24 d'axe perpendiculaire à l'axe 15, montée entre la tourelle principale et la plaque de contre-opération, dans une position qui permet de travailler sur des pièces prises en charge par les postes 18 et usinées par les outils des postes 23 de la plaque de contre-opération. Cette unité d'usinage 24 porte au moins un poste d'usinage 25 équipé d'un outil 26 qui peut être entraîné en rotation comme le montre la double flèche A5 et déplacé axialement selon une direction perpendiculaire à l'axe 15 comme le montre la double flèche X₅.

La machine de base se compose de la tête d'usinage 12 portant les outils 13 et 14, des moyens 11 pour amener la matière à usiner dans cette tête d'usinage, et de la tourelle principale 16. Cette unité de base permet d'effectuer simultanément deux opérations, l'une consistant à décolleter une pièce au moyen des outils 13 et 14 et l'autre consistant à usiner la face frontale de cette pièce.

Un premier perfectionnement avantageux consiste à adjoindre à cette unité de base la plaque de contre-opération 22. Dans cette option, au moins trois interventions peuvent être effectuées simultanément puisque au moins une pièce préalablement usinée comme mentionné ci-dessus peut être prise en charge par les postes 18 et amenée en position d'usinage en regard des outils 23.

Une option avantageuse peut être constituée par l'adjonction de la tourelle auxiliaire 20 qui permet d'effectuer un usinage sur la face frontale d'une pièce par ailleurs usinée par les outils de décolletage 13 et 14 pendant que la tourelle principale transfère des pièces préalablement usinées et les fait usiner par les outils 23 de la plaque de contre-opération.

Un autre perfectionnement avantageux consiste à adjoindre la troisième unité d'usinage 24 qui permet de compléter un usinage latéral sur une pièce portée par l'un des postes de prise en charge 18 pendant ou après qu'elle ait été usinée sur sa face arrière par les outils des postes 23 de la plaque de contre-opération 22.

La description ci-dessus permet de rendre évident le fait que les différentes tourelles et unités associées à l'unité de base permettent d'augmenter le nombre des usinages simultanés et de réduire considérablement le temps nécessaire à la production d'une pièce en fractionnant le temps total grâce au fait que les opérations peuvent être effectuées simultanément.

## Revendications

1. Machine d'usinage, notamment de décolletage, comportant une première unité d'usinage comprenant une tête d'usinage (12) et des moyens pour amener et déplacer axialement la matière à usiner, une tourelle principale (16) équipée d'au moins un poste d'usinage (17) agencé pour usiner la face avant d'une pièce travaillée par ladite tête d'usinage, et une deuxième unité d'usinage (22) agencée pour usiner la face arrière de ladite pièce, ladite tourelle principale (16) étant du type revolver et comportant en outre au moins un poste de prise en charge (18) de pièces travaillées par ladite tête d'usinage (12) et/ou usinées antérieurement sur leur face avant, en vue d'un usinage sur leur face arrière simultanément à l'usinage d'une autre pièce par ladite tête d'usinage (12), caractérisée en ce qu'elle comporte une troisième unité d'usinage (24), portant au moins un poste d'usinage (25) équipé d'au moins un outil (26) perpendiculaire à l'axe (15) de la pièce, et en ce que ladite tourelle principale (16) comporte au moins deux desdits postes de prise en charge (18) de pièces, en vue de l'usinage de ces pièces par la deuxième et/ou la troisième unité d'usinage (22, 24) simultanément à l'usinage d'une autre pièce par ladite tête d'usinage (12).

2. Machine selon la revendication 1, caractérisée en ce que lesdits postes de prise en charge (18) d'une pièce sont mobiles axialement.

3. Machine selon la revendication 1, caractérisée en ce que la deuxième unité d'usinage (22) comporte plusieurs postes d'usinage (23), d'axes parallèles à l'axe (15) de la pièce et disposés dans une position telle que les postes de prise en charge (18) d'une pièce puissent être amenés en face de ces postes d'usinage.

4. Machine selon la revendication 1, caractérisée en ce que ledit outil (26) de ladite troisième unité d'usinage (25) est rotatif.

5. Machine selon la revendication 1, caractérisée en ce que le poste d'usinage (25) de la troisième unité d'usinage (24) est mobile axialement dans une direction perpendiculaire à l'axe (15) de la pièce.

6. Machine selon la revendication 1, caractérisée en ce qu'elle comporte une tourelle auxiliaire (20), comportant au moins un poste d'usinage (21) et montée sur une coulisse (19) perpendiculaire à l'axe (15) de la pièce.

7. Machine selon la revendication 6, caractérisée en ce que le poste d'usinage (21) de la tourelle auxiliaire (20) est rotatif.

8. Machine selon la revendication 6, caractérisée en ce que le poste d'usinage (21) de la tourelle auxiliaire (20) est mobile axialement selon une direction parallèle à l'axe (15) de la pièce.

9. Machine selon la revendication 6, caractérisée en ce que la tourelle principale (16) et la tourelle auxiliaire (20) sont montées sur une même coulisse (19) pour être mobiles dans une direction perpendiculaire à l'axe (15) de la pièce.

## Patentansprüche

1. Werkzeugmaschine (bzw. Bearbeitungsmaschine), insbesondere für Abstecharbeiten, mit einer ersten Bearbeitungseinheit, die folgendes aufweist: einen Bearbeitungskopf (12) und Einrichtungen, um das zu bearbeitende Gut heranzubringen und axial zu verschieben, einen Hauptwerkzeughalter (16), der mit mindestens einer Bearbeitungsstation (17) ausgerüstet ist, welche dazu dient, die Vorderseite eines von dem Bearbeitungskopf hergestellten Teils zu bearbeiten und eine zweite Bearbeitungseinheit (22), die dazu dient, die Rückseite des Teils zu bearbeiten, wobei der Hauptwerkzeughalter (16) ein Revolverkopf ist und der außerdem mindestens eine Umspannstation (18) für Teile aufweist, die von dem Bearbeitungskopf (12) hergestellt und/oder vorher auf ihrer Vorderseite bearbeitet sind, im Hinblick auf eine Bearbeitung auf ihrer Rückseite, und zwar gleichzeitig mit einer Bearbeitung eines weiteren Teiles durch den Bearbeitungskopf (12), **dadurch gekennzeichnet,** daß sie eine dritte Bearbeitungseinheit (24) aufweist, die mindestens eine senkrecht zur Achse (15) des Teils liegende Bearbeitungsstation (25) trägt, die mit mindestens einem Werkzeug (26) ausgestattet ist, und daß der Hauptrevolverkopf (16) mindestens zwei der genannten Teile-Umspannstationen (18) aufweist, und zwar im Hinblick auf die Bearbeitung dieser Teile durch die zweite und/oder die dritte Bearbeitungseinheit (22,24) gleichzeitig mit der Bearbeitung eines weiteren Teiles durch den Bearbeitungskopf (12).

2. Maschine nach Anspruch 1,
**dadurch gekennzeichnet,** daß
die Stationen zum Umspannen (18) eines Teiles axial bewegbar sind.

3. Maschine nach Anspruch 1,
**dadurch gekennzeichnet,** daß
die zweite Bearbeitungseinheit (22) mehrere Bearbeitungsstationen (23) mit zur Achse (15) des Teiles parallelen Achsen aufweist, die so angeordnet sind, daß man die Stationen zum Umspannen (18) eines Teiles so heranbringen kann, daß sie gegenüber diesen Bearbeitungsstationen zu liegen kommen.

4. Maschine nach Anspruch 1,
**dadurch gekennzeichnet,** daß
das Werkzeug (26) der dritten Bearbeitungseinheit (25) ein rotierendes Werkzeug ist.

5. Maschine nach Anspruch 1,
**dadurch gekennzeichnet,** daß
die Bearbeitungsstation (25) der dritten Bearbeitungseinheit (24) axial in einer zur Achse (15) des Teiles senkrechten Richtung bewegbar ist.

6. Maschine nach Anspruch 1,
**dadurch gekennzeichnet,** daß
sie einen Hilfsrevolverkopf (20) hat, der mindestens eine Bearbeitungsstation (21) aufweist und der auf einer senkrecht zur Achse (15) des Teiles liegenden Gleitführung (19) montiert ist.

7. Maschine nach Anspruch 6,
**dadurch gekennzeichnet,** daß
die Bearbeitungsstation (21) des Hilfsrevolverkopfes (20) eine rotierende Bearbeitungsstation ist.

8. Maschine nach Anspruch 6,
**dadurch gekennzeichnet,** daß
die Bearbeitungsstation (21) des Hilfsrevolverkopfes (20) axial bewegbar ist, und zwar in einer zur Achse (15) des Teiles parallelen Richtung.

9. Maschine nach Anspruch 6,
**dadurch gekennzeichnet,** daß
der Hauptrevolverkopf (16) und der Hilfsrevolverkopf (20) auf ein und derselben Gleitführung (19) montiert sind, um in einer zur Achse (15) des Teiles senkrechten Achse bewegbar zu sein.

## Claims

1. Metal-working machine, in particular for bar machining, comprising a first machining unit comprising a machining head (12) and means for bringing and axially displacing the part to be machined, a principal turret (16) equipped with at least one machining station (17) for machining the front surface of a part worked on by said machining head, and a second machining unit (22) for machining the back surface of said part, said principal turret (16) being a revolving-lathe-type turret and further comprising at least one station (18) for receiving parts worked on by said machining head (12) and/or previously machined on the front surface so that the back surface may be simultaneously machined while another part is being machined by said machining head (12), characterized in that it comprises a third machining unit (24) supporting at least one machining station (25) equipped with at least one tool (26) perpendicular to the axis (15) of the part, and in that said principal turret (16) comprises at least two stations (18) for receiving parts so that these parts can be machined by the second and/or third machining unit (22, 24) simultaneously with the machining of another part by said machining head (12).

2. Machine according to claim 1, characterized in that said stations (18) for receiving parts are axially movable.

3. Machine according to claim 1, characterized in that said second machining unit (22) comprises several machining stations (23) with axes parallel to the axis (15) of the part and positioned so that the part receiving stations (18) may be brought to a position across from these machining units.

4. Machining according to claim 1, characterized in that said tool (26) on said third machining unit (25) is rotatable.

5. Machine according to claim 1, characterized in that the machining station (25) of the third machining unit (24) is axially movable in a direction perpendicular to the axis (15) of the part.

6. Machine according to claim 1, characterized in that it comprises an auxiliary turret (20) comprising at least one machining station (21) and is attached to a slide (19) perpendicular to the axis (15) of the part.

7. Machine according to claim 6, characterized in that the machining station (21) of the auxiliary turret (20) is rotatable.

8. Machine according to claim 6, characterized in that the machining station (21) of the auxiliary turret (20) is axially movable in a direction parallel to the axis (15) of the part.

9. Machine according to claim 6, characterized in that the principal turret (16) and the auxiliary turret (20) are attached to the same slide (19) so as to be movable in a direction perpendicular to the axis (15) of the part.
